# EUROPÄISCHE PATENTSCHRIFT

(11) **EP 2 806 252 B1**
(45) Veröffentlichungstag und Bekanntmachung des Hinweises auf die Patenterteilung: **30.08.2017**
(21) Anmeldenummer: 14168833.3
(22) Anmeldetag: 19.05.2014
(51) Int. Cl.: G01D 18/00

(54) **Elektrisch betriebenes Gerät, Verfahren zur Kalibrierung eines Sensors und Computerprogrammprodukt**
Electrically operated device, method for calibrating a sensor and computer program product
Appareil électrique, procédé de calibrage d'un capteur et produit de programme informatique

(30) Priorität: 24.05.2013 DE 102013105340
(43) Veröffentlichungstag der Anmeldung: 26.11.2014
(73) Patentinhaber: Vorwerk & Co. Interholding GmbH, 42275 Wuppertal (DE)
(72) Erfinder: Plachetka, Robert, 42389 Wuppertal (DE)
(74) Vertreter: Müller, Enno

(56) Entgegenhaltungen:
- EP-A1- 2 172 783
- WO-A1-2012/030286
- DE-A1- 10 207 228
- DE-A1-102011 013 773
- DE-A1-102012 213 232
- US-A1- 2012 148 272
- US-A1- 2012 330 596

## Beschreibung

Die Erfindung betrifft zunächst ein elektrisch betriebenes Gerät nach den Merkmalen des Oberbegriffes des Anspruches 1. Weiter betrifft die Erfindung ein Verfahren zur Kalibrierung eines Sensors nach den Merkmalen des Oberbegriffes des Anspruches 2 und schließlich ein Computerprogrammprodukt zur Kalibrierung eines Sensors nach den Merkmalen des Oberbegriffes des Anspruches 3.

Geräte der in Rede stehenden Art sind bekannt. Diese finden insbesondere Verwendung im Haushaltsbereich, so bspw. in Form von Küchenmaschinen zur Verarbeitung von Lebensmitteln und/ oder zur Zubereitung von Speisen. Darüber hinaus sind Bodenreinigungsgeräte bzw. Bodenpflegegeräte bekannt, so insbesondere in Form von Haushalts-Staubsaugern oder Hartbodenpflegegeräten, wie bspw. Bohnergeräte. Derartige Geräte verfügen in der Regel über zumindest einen Sensor, oft auch über mehrere Sensoren. So bspw. im Falle einer Küchenmaschine über einen Waage- oder Temperatursensor. Bezüglich Bodenreinigungsgeräten in Form von handgeführten Staubsaugern oder dergleichen sind bspw. Sensoren zur Erkennung des Bodenbelages bekannt.

Diese Sensoren bedürfen vor einer Auslieferung des Gerätes bzw. vor einer Erstbenutzung desselben einer Kalibrierung. Hierzu ist es weiter bekannt, das Gerät über eine Schnittstelle in den Kalibrierungsmodus zu versetzen.

Zum Stand der Technik ist zunächst auf die DE 10 2012 213 232 A1, die US 2012/330596 A1, die US 2012/0148272 A1, die WO 2012/030286 A1, die DE 102 07 228 A1 und die DE 10 2011 013 773 A1 zu veweisen.

In dem Kalibrierungsmodus kann ein von dem Sensor gelieferter Wert als "Null" oder als ein bestimmter Wert definiert werden, so dass bei dieser Einstellung nachher betrieblich der gleiche Wert, wenn er erfasst wird, als Null oder als der genannte bestimmte Wert interpretiert wird und die Abweichungen hiervon als diesbezügliche Abweichungen bezogen auf den bestimmte Wert interpretiert werden. Auch ist diesbezüglich bekannt, das Gerät über Bedienelemente, bspw. über eine Tastenkombination mittels vorhandener Tasten des Gerätes in den Kalibrierungsmodus zu versetzen.

Weiter ist aus der DE 102 07 228 A1 die Kalibrierung eines Sensors in einem Kraftfahrzeug bekannt. Die für die Kalibrierung vorgesehenen Spannungen sind innerhalb des Steuerungsgerätes anzulegen. Die bei einem ersten Kalibrieren des Sensors erzeugten Kalibrierdaten werden gespeichert und bei Bedarf abgerufen. Aus der EP 2 172 783 A1 ist ein Geschwindigkeitssensor an einem Lastkraftwagen bekannt. In der elektronischen Schaltung des Sensors sind Mittel vorgesehen, die Energieversorgung eines oder mehrerer elektronischer Bauteile zu unterbrechen und hierdurch einen Kalibrierungszustand aufzurufen.

Ausgehend von einem Stand der Technik etwa gemäß der DE 10 2007 228 A1 stellt sich die Erfindung die Aufgabe, ein Gerät der in Rede stehenden Art insbesondere hinsichtlich der Versetzung in den Kalibrierungsmodus zu verbessern und/ oder ein Verfahren zur Kalibrierung eines Sensors in oder an einem Gerät wie bspw. einer Küchenmaschine oder einem Bodenreinigungs- oder -pflegegerät anzugeben, sowie auch ein diesbezügliches Computerprogrammprodukt zur Verfügung zu stellen.

Diese Aufgabe ist hinsichtlich des elektrisch betriebenen Gerätes beim Gegenstand des Anspruches 1 gelöst, wobei darauf abgestellt ist, dass das Gerät durch Anlegen einer zu der Betriebsspannung des Gerätes unterschiedlichen Eingangsspannung oder einer vorgegebenen Spannungsabfolge der Eingangsspannung in den Kalibriermodus versetzbar ist, wenn die Spannung oder die Spannungsabfolge an dem Anschluss angelegt wird, der für den üblichen Betrieb des Gerätes mit Betriebsspannung vorgesehen ist und dass das Gerät nur einmal in den Kalibriermodus versetzbar ist.

Diese Aufgabe ist weiter hinsichtlich des Verfahrens zur Kalibrierung eines Sensors beim Gegenstand des Anspruches 2 gelöst, wobei darauf abgestellt ist, dass das Gerät durch Anlegen einer zu der Betriebsspannung des Gerätes unterschiedlichen Eingangsspannung oder einer vorgegebenen Spannungsabfolge der Eingangsspannung in den Kalibriermodus versetzt wird, wenn die Spannung oder die Spannungsabfolge an dem Anschluss angelegt wird, der für den üblichen Betrieb des Gerätes mit Betriebsspannung vorgesehen ist, wobei die Versetzung in den Kalibriermodus nur einmal vorgenommen werden kann.

Die Aufgabe ist schließlich hinsichtlich des Computerprogrammproduktes beim Gegenstand des Anspruches 3 gelöst, wobei darauf abgestellt ist, dass ein Mikroprozessor oder eine elektrische Schaltung vorgesehen ist, mit deren Hilfe in programmmäßiger Abfolge das Gerät durch Anlegen einer zu der Betriebsspannung des Gerätes unterschiedlichen Eingangsspannung oder einer vorgegebenen Spannungsabfolge der Eingangsspannung in den Kalibrierungsmodus versetzbar ist und nach Abschluss der Kalibrierung wieder in den üblichen Betriebsbereitschaftszustand zurückversetzbar ist, wenn die Spannung oder die Spannungsabfolge an dem Anschluss angelegt wird, der für den üblichen Betrieb des Gerätes mit Betriebsspannung vorgesehen ist, wobei das Gerät nur einmal in den Kalibriermodus versetzbar ist..

Bei den bekannten Geräten mit einer empfindlichen Sensorik müssen diese insbesondere in der Fertigung kalibriert werden, bspw. hinsichtlich eines Waage-, Druck- oder Temperatursensors. Diese Prozessschritte sind zumeist zeitintensiv und aufwändig. Die Erfindung zielt darauf ab diesen Fertigungsschritt zu verbessern und zu vereinfachen. So wird das Gerät über eine "ungültige" Eingangsspannung oder mehrere unterschiedliche, aufeinander folgende Eingangsspannungen selbsttätig in den Kalibrierungsmodus versetzt, wonach die Sensorik auf die in der Fertigung bekannten Parameter wie bspw. Luftdruck oder Temperatur kalibriert wird. Es wird hierbei als Auslöser für das Versetzen in den Kalibrierungsmodus eine Spannung angelegt, die sich von der Betriebsspannung des Gerätes deutlich unterscheidet. Weiter bevorzugt wird hierbei eine Spannung angelegt, die in der üblichen Nutzungsumgebung des Gerätes, bspw. im Haushaltsbereich, nicht vorhanden ist. So ist weiter bevorzugt, dass ein Gerät, welches in üblicher Weise eine Betriebsspannung von 230 V aufweist bei Anlegen einer Spannung von bspw. 100 V in den Kalibrierungsmodus versetzt wird. Weiter bevorzugt ist hierbei eine Spannung zum Starten des Kalibrierungsmodus von 50 bis 150 V, so weiter bspw. 100,110,120 oder auch 135 V gewählt.

Da diese Geräte zumeist eine Eingangsspannungs-/ZwischenkreisspannungsÜberwachung besitzen, ist kein weiterer Zusatzaufwand in der Elektronik notwendig. Auch ist diesbezüglich eine vorgegebene Spannungsabfolge möglich, um das Gerät in den Kalibrierungsmodus zu versetzen, so bspw. zur Folge eines vordefinierten Spannungsverlaufes von 100 V - 120 V - 100 V.

Dadurch, dass das Gerät nur einmal in dem Kalibriermodus versetzbar ist bzw. versetzt wird, ist sichergestellt, dass das Gerät bspw. bei einem Spannungseinbruch im Haushaltsnetz, d. h. bei üblichem Betrieb des Gerätes, nicht selbsttätig in den Kalibrierungsmodus wechselt und ggf. den oder die Sensoren auf falsche Werte neu kalibriert. Das Gerät "merkt" sich hierbei, etwa durch Abspeicherung des Merkmals, dass eine Versetzung in den Kalibrierungsmodus erfolgt ist, geeigneter Weise in einem nicht flüchtigen Speicher. Wenn dieser bestimmte Vorgang, speziell die bestimmte Spannung oder Spannungsabfolge nochmals durchlaufen bzw. in dem Gerät angelegt wird, kann programmmäßig entschieden werden, dass kein Versetzen in den Kalibrierungsmodus mehr erfolgt.

Entsprechend ist bevorzugt, dass eine vorgenommene Kalibrierung als Merkmal hinterlegt wird, welches Merkmal eine erneute Kalibrierung unterbindet. Ggf. ist dieses Merkmal durch einen berechtigten Eingriff, bspw. durch einen Kundendienst, zu löschen.

Ein weiterer Schutz vor einem erneuten Versetzen des Gerätes in den Kalibrierungsmodus ist in einer weiter bevorzugten Ausgestaltung durch die vorgegebene Spannungsabfolge gegeben, die ein Versetzen in den Kalibrierungsmodus auslöst. Hierbei wird bevorzugt eine Spannungsabfolge vorgegeben, die auch bei einem Spannungseinbruch im Haushaltsnetz, d. h. bei üblichem Betrieb des Gerätes, in der Form (Reihenfolge und Höhe der unterschiedlichen Spannungen) mit einer hohen Wahrscheinlichkeit nicht vorkommt.

Hinsichtlich des Verfahrens zur Kalibrierung eines Sensors verfügen die Geräte in bekannter Weise hierzu über eine Schnittstelle. Alternativ wird der Modus über eine Tastenkombination unter Nutzung von geräteseitigen Bedienelementen aufgerufen.

Die vor- und nachstehend angegebenen Bereiche bzw. Wertebereiche oder Mehrfachbereiche schließen hinsichtlich der Offenbarung auch sämtliche Zwischenwerte ein, insbesondere in Einzehntel-Schritten der jeweiligen Dimension, ggf. also auch dimensionslos, insbesondere 1,01-fach etc., einerseits zur Eingrenzung der genannten Bereichsgrenzen von unten und/oder oben, alternativ oder ergänzend aber auch in Hinblick auf die Offenbarung eines oder mehrerer singulärer Werte aus dem jeweils angegebenen Bereich. Insbesondere ist also bspw. bei einer Bereichsangabe von 50 -150 V auch umfasst 50,1 -150 V, 50 - 149,9 V, 50,2 -150 V, 50,2 -149,8 etc., wobei zugleich ein Einzelwert wie 50,1 V, 49,9 V etc. auch für sich offenbart ist.

Nachstehend ist die Erfindung anhand der beigefügten Zeichnung erläutert, die aber lediglich ein Ausführungsbeispiel darstellt. Auf der Zeichnung zeigt:
- Fig. 1: in einer Ausführungsform ein Gerät in Form einer Küchenmaschine mit zumindest einem Temperatur- und zumindest einem Waagesensor;
- Fig. 2: eine elektronische Schaltungsanordnung;
- Fig. 3: ein Doppeldiagramm zur Darstellung erfasster Spannungen und davon abhängiger Messsignale.

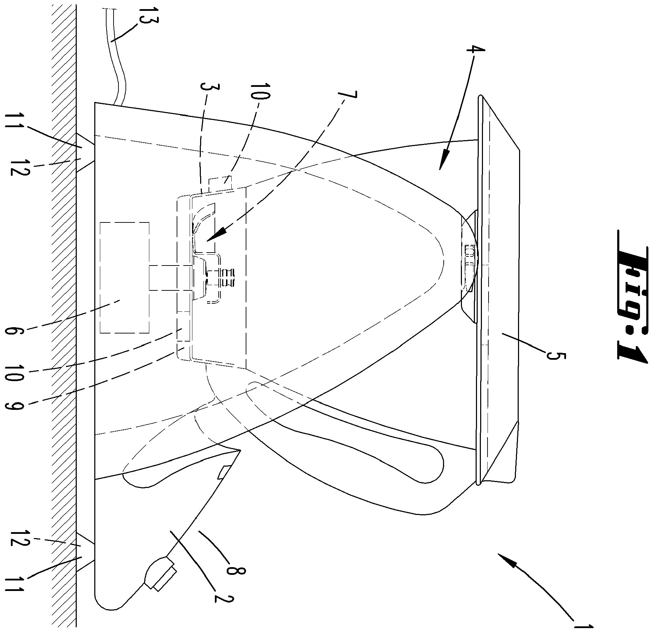

Dargestellt und beschrieben ist zunächst mit Bezug zu Fig. 1 ein Gerät 1 in Form einer Küchenmaschine.

Das Gerät 1 weist im Wesentlichen zunächst ein Gehäuse 2 auf mit einer Gefäßaufnahme 3. In der Gefäßaufnahme 3 ist ein Rührgefäß 4 entnehmbar aufgenommen. Das Rührgefäß 4 ist insbesondere im Betrieb des Gerätes 1 durch einen Deckel 5 verschließbar. Das Gerät 1 weist weiter einen elektromotorischen Antrieb 6 für ein, bodenseitig im Rührgefäß 4 angeordnetes Rührwerk 7 auf. Die Aktivierung und Drehzahleinstellung des Antriebes 6 bzw. Rührwerkes 7 erfolgt über nicht näher dargestellte Stellelemente im Bereich eines Bedienfeldes 8.

Weiter ist bevorzugt der Boden des Rührgefäßes 7 aufheizbar. Hierzu ist bevorzugt eine elektrische Widerstandsheizung 9 vorgesehen.

Insbesondere die während einer Zubereitung einer Speise in dem Rührgefäß 4 vorherrschende Temperatur wird bevorzugt mittels Temperatursensoren 10 gemessen, bspw. NTC-Sensoren. Hierbei ist bevorzugt ein Sensor 10 im Bereich der Widerstandsheizung 9, d. h. bodenseitig des Rührgefäßes 4 vorgesehen. Ein zweiter ist bevorzugt wandungsseitig des Rührgefäßes 4 angeordnet.

Darüber hinaus verfügt das Gerät 1 bevorzugt über eine Waageneinrichtung. Hierzu sind insbesondere die Stellfüße 10 des Gerätes 1 mit entsprechenden Waagesensoren 12 versehen oder weiter bspw. über, mit Waagesensoren versehene Waagebalken am Chassis des Gerätes 1 befestigt.

Die Spannungsversorgung der elektrischen und elektronischen Komponenten des Gerätes 1 erfolgt über ein Netzanschlusskabel 13.

In dem Gehäuse 2 ist weiter bevorzugt eine nicht näher dargestellte Elektronik vorgesehen, insbesondere zur Steuerung des Gerätes 1, so weiter insbesondere zur Steuerung der Widerstandsheizung 9 und/oder des Antriebes 6 und/oder der Waageeinrichtung. Die Elektronik kann insbesondere auch einen bevorzugt nicht flüchtigen Speicher enthalten, zur Abspeicherung von bspw. Betriebszuständen.

Im üblichen Betrieb, d. h. insbesondere bei Anschluss des Gerätes 1 an das Haushalts-Stromnetz, wird das Gerät 1 mit einer Wechselspannung U_{N} von 230 V betrieben.

Insbesondere vor einer Auslieferung des Gerätes 1, d. h. nach einer werksmäßigen Fertigstellung desselben, weiter insbesondere vor einer Erstbenutzung des Gerätes 1 sind einzelne oder alle Sensoren des Gerätes 1 zu kalibrieren, so weiter insbesondere die Temperatursensoren 10 und/oder die Waagesensoren 12. Hierzu ist das Gerät 1 zunächst in einem Kalibrierungsmodus zu versetzen. Dies erfolgt in vorteilhafter Weise durch Anlegen einer sich von der üblichen Betriebsspannung (hier bspw. 230 V) deutlich unterscheidenden Spannung.

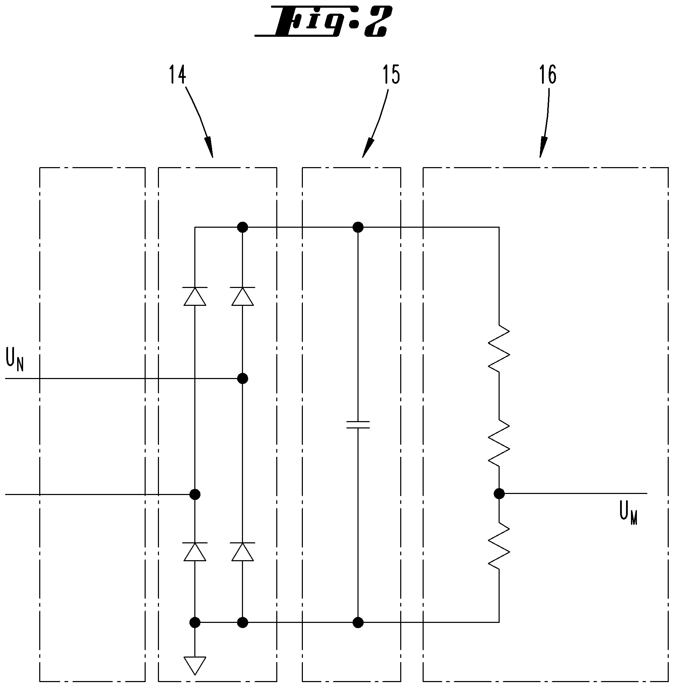

In Fig. 2 ist eine beispielhafte Schaltung dargestellt. Hier ist zunächst ein mit dem Netzeingang (Spannung U_{N}) verbundener Brückengleichrichter 14 vorgesehen, an welchem sich ein Zwischenkreis 15 anschließt. Brückengleichrichter 14 und Zwischenkreis 15 sind bevorzugt Bestandteil üblicher elektronischer Schaltungen zur Spannungsversorgung von Geräten.

Die Spannungsmessung 16, insbesondere bestehend aus wenigen, hier drei diskreten elektronischen Bauteilen, insbesondere Widerständen, wandelt die Zwischenkreisspannung in ein Messsignal UM, welches Messsignal bevorzugt durch einen nicht dargestellten Mikrokontroller erfasst und ausgewertet wird. Durch eine Veränderung der Eingangspannung U_{N} wird auch die Zwischenkreisspannung geändert und damit auch das proportionale Messsignal UM.

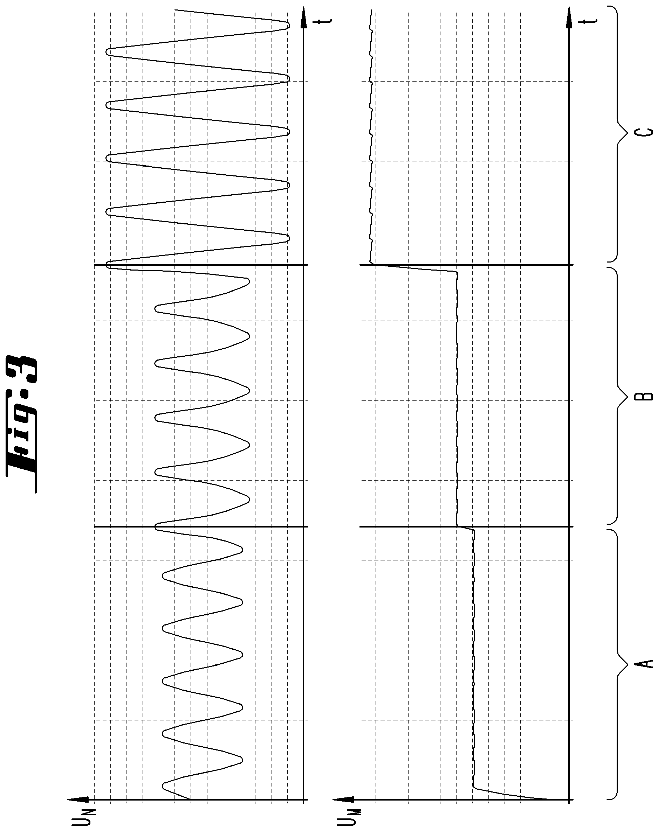

In Fig. 3 ist ein Doppeldiagramm dargestellt, mittels welchem die Abhängigkeit von der über einen bestimmten Zeitraum angelegten Eingangspannung U_{N} und dem hieraus generierten Messsignal UM ersichtlich ist. So ergibt eine übliche Betriebsspannung von 230 V im dargestellten Bereich C ein Messsignal UM von bevorzugt 3 bis 3,6 V, insbesondere etwa 3,3 V. Entsprechend wird ein Messsignal UM im Bereich zwischen 3 und 3,6 V durch den Mikrokontroller als Betriebsspannung registriert, so dass entsprechend das Gerät 1 in den üblichen Betriebsmodus versetzt wird.

In den weiter dargestellten Messbereichen A und B sind im Vergleich zur Betriebsspannung im Messbereich C sich unterscheidende Eingangsspannung U_{N} angelegt, so im Messbereich A eine Eingangsspannung U_{N} von etwa 100 V und im Bereich B von 120 V. Hieraus ergeben sich bevorzugt Messsignale UM bei 100 V von etwa 1,2 bis 1,8 V, bevorzugt 1,5 V und bei 120 V Eingangsspannung von 1,5 bis 2,1 V, insbesondere 1,8 V.

Ein Messsignal, welches in der Spannungshöhe sich signifikant zu der Spannungshöhe bei üblicher Betriebsspannung unterscheidet, wird durch den Mikrokontroller bevorzugt umgesetzt zur Versetzung des Gerätes 1 in den Kalibriermodus. Signifikant bedeutet in diesem Zusammenhang, dass der Messwert bevorzugt 10 bis 80 %, weiter bevorzugt 30 bis 60 % des dem der Betriebsspannung zugehörigen Messwertes entspricht. Das Gerät 1 ist nur einmal in den Kalibrierungsmodus versetzbar. Entsprechend wird nach einem eingeleiteten und/oder durchgeführten Kalibriervorgang ein entsprechendes Merkmal gesetzt, welches bevorzugt ausschließt, dass der Mikrokontroller bei einem Abfall der Spannung auf ein üblicherweise den Kalibrierungsmodus auslösendes Niveau eine solche Versetzung auslöst.

Eine weitere Möglichkeit zur exakten Definition eines Auslösesignals zum Starten des Kalibrierungsvorganges ist in einer weiteren Ausgestaltung dadurch gegeben, dass eine vorgegeben Spannungsabfolge durch den Mikrokontroller zu erfassen ist. So bspw. eine Spannungsabfolge 100 V -120 V -100 V. Diesbezüglich besteht auch die Möglichkeit die übliche Betriebsspannung (hier 230 V) mit in diese Spannungsabfolge einzubauen. Ebenfalls ist hierbei eine vorgegebene Abfolge von bevorzugt unterschiedlichen Spannungshöhen, weiter bevorzugt jeweils über einen vorgegebenen Zeitraum, nötig, um in den Kalibrierungsmodus zu wechseln. So ist bspw. eine Spannungsabfolge vorgesehen, bei welcher die Eingangsspannung U_{N} zunächst über bspw. 100 Millisekunden 100 V aufweist, hiernach bspw. über 60 Millisekunden 150 V und abschließend über 120 Millisekunden erneut 100 V oder 80 V.

### BEZUGSZEICHENLISTE

- 1: Gerät
- 2: Gehäuse
- 3: Gefäßaufnahme
- 4: Rührgefäß
- 5: Deckel
- 6: Antrieb
- 7: Rührwerk
- 8: Bedienfeld
- 9: Widerstandsheizung
- 10: Temperatursensor
- 11: Stellfuß
- 12: Waagesensor
- 13: Netzanschlusskabel
- 14: Brückengleichrichter
- 15: Zwischenkreis
- 16: Spannungsmessung

- A: Messbereich
- B: Messbereich
- C: Messbereich
- U_{N}: Eingangspannung
- UM: Messwert

## Patentansprüche

1. Elektrisch betriebenes Gerät (1), welches in üblicher Weise eine Betriebsspannung von 230 V aufweist, bspw. eine Küchenmaschine oder ein Bodenreinigungs- oder -pflegegerät, wobei das Gerät (1) einen Sensor (10,12) aufweist, der vor einer Auslieferung oder Erstbenutzung des Gerätes (1) einer Kalibrierung bedarf, wozu das Gerät (1) in einen Kalibrierungsmodus versetzbar ist, **dadurch gekennzeichnet, dass** das Gerät (1) durch Anlegen einer zu der Betriebsspannung des Gerätes (1) unterschiedlichen Eingangsspannung oder einer vorgegebenen Spannungsabfolge der Eingangsspannung in den Kalibrierungsmodus versetzbar ist, wenn die Spannung oder die Spannungsabfolge an dem Anschluss angelegt wird, der für den üblichen Betrieb des Gerätes mit Betriebsspannung vorgesehen ist und dass das Gerät (1) nur einmal in den Kalibriermodus versetzbar ist.

2. Verfahren zur Kalibrierung eines Sensors (10,12) in oder an einem Gerät (1), welches in üblicher Weise eine Betriebsspannung von 230 V aufweist, bspw. eine Küchenmaschine oder einem Bodenreinigungs- oder -pflegegerät, **dadurch gekennzeichnet, dass** das Gerät (1) durch Anlegen einer zu der Betriebsspannung des Gerätes (1) unterschiedlichen Eingangsspannung oder einer vorgegebenen Spannungsabfolge der Eingangsspannung in den Kalibrierungsmodus versetzt wird, wenn die Spannung oder die Spannungsabfolge an dem Anschluss angelegt wird, der für den üblichen Betrieb des Gerätes mit Betriebsspannung vorgesehen ist, wobei die Versetzung in den Kalibriermodus nur einmal vorgenommen werden kann.

3. Computerprogramm oder Computerprogrammprodukt zur Kalibrierung eines Sensors in oder an einem Gerät, welches in üblicher Weise eine Betriebsspannung von 230 V aufweist, bspw. einer Küchenmaschine oder einem Bodenreinigungs- oder -pflegegerät, wobei das Gerät einen Sensor aufweist, der vor Auslieferung oder Erstbenutzung des Gerätes (1) einer Kalibrierung bedarf, wozu das Gerät (1) in einen Kalibrierungsmodus versetzbar ist, **dadurch gekennzeichnet, dass** ein Mikroprozessor oder eine elektrische Schaltung vorgesehen ist mit deren Hilfe in programmmäßiger Abfolge das Gerät (1) durch Anlegen einer zu der Betriebsspannung des Gerätes (1) unterschiedlichen Eingangsspannung oder einer vorgegebenen Spannungsabfolge der Eingangsspannung in den Kalibrierungsmodus versetzbar ist und nach Abschluss der Kalibrierung wieder in den üblichen Betriebsbereitschaftszustand zurück versetzbar ist, wenn die Spannung oder die Spannungsabfolge an dem Anschluss angelegt wird, der für den üblichen Betrieb des Gerätes mit Betriebsspannung vorgesehen ist, wobei das Gerät nur einmal in den Kalibriermodus versetzbar ist.

## Claims

1. Electrically operated device (1) which, in a conventional manner, has an operating voltage of 230 V, for example a kitchen appliance or a floor-cleaning or floor-care device, the device (1) comprising a sensor (10, 12) which requires calibration prior to delivery or the first use of the device (1), for which purpose the device (1) can be shifted into a calibration mode, **characterised in that**, by applying an input voltage that is different from the operating voltage of the device (1) or by applying a predefined voltage sequence of the input voltage, the device (1) can be shifted into the calibration mode when the voltage or the voltage sequence is applied at the connection which, for conventional operation of the device, is provided with operating voltage, and **in that** the device (1) can be shifted into the calibration mode only once.

2. Method for calibrating a sensor (10, 12) in or on a device (1) which, in a conventional manner, has an operating voltage of 230 V, for example a kitchen appliance or a floor-cleaning or floor-care device, **characterised in that**, by applying an input voltage that is different from the operating voltage of the device (1) or by applying a predefined voltage sequence of the input voltage, the device (1) is shifted into the calibration mode when the voltage or the voltage sequence is applied at the connection which, for conventional operation of the device, is provided with operating voltage, it being possible for the shift into the calibration mode to be carried out only once.

3. Computer program or computer program product for calibrating a sensor in or on a device which, in a conventional manner, has an operating voltage of 230 V, for example a kitchen appliance or a floor-cleaning or floor-care device, the device comprising a sensor which requires calibration prior to delivery or the first use of the device (1), for which purpose the device (1) can be shifted into a calibration mode, **characterised in that** a microprocessor or an electrical circuit is provided, by means of which, in a program sequence, the device (1) can be shifted into the calibration mode by applying an input voltage that is different from the operating voltage of the device (1) or by applying a predefined voltage sequence of the input voltage, and once the calibration has finished, can be shifted back into the conventional idle state when the voltage or voltage sequence is applied at the connection which, for conventional operation of the device, is provided with operating voltage, it being possible for the device to be shifted into the calibration mode only once.

## Revendications

1. Appareil électrique (1) lequel présente de manière habituelle une tension de fonctionnement de 230 V, par exemple un robot de cuisine ou un appareil de nettoyage ou de traitement de sol, dans lequel l'appareil (1) comprend un capteur (10, 12) qui nécessite un étalonnage avant livraison ou première utilisation de l'appareil (1) et pour lequel l'appareil (1) peut être placé dans un mode d'étalonnage, **caractérisé en ce que** l'appareil (1) est susceptible d'être placé dans le mode d'étalonnage par application d'une tension d'entrée différente de la tension de fonctionnement de l'appareil (1) ou d'une séquence de tension prédéterminée de la tension d'entrée, lorsque la tension ou la séquence de tension est appliquée au raccordement prévu pour le fonctionnement habituel de l'appareil sous tension de fonctionnement et **en ce que** l'appareil (1) ne peut être placé qu'une seule fois dans le mode d'étalonnage.

2. Procédé d'étalonnage d'un capteur (10, 12) dans ou sur un appareil (1) lequel présente de manière habituelle une tension de fonctionnement de 230 V, par exemple un robot de cuisine ou un appareil de nettoyage ou de traitement de sol, **caractérisé en ce que** l'appareil (1) est placé dans le mode d'étalonnage par application d'une tension d'entrée différente de la tension de fonctionnement de l'appareil (1) ou d'une séquence de tension prédéterminée de la tension d'entrée, lorsque la tension ou la séquence de tension est appliquée au raccordement prévu pour le fonctionnement habituel de l'appareil sous tension de fonctionnement, dans lequel le placement dans le mode d'étalonnage ne peut être opéré qu'une seule fois.

3. Programme d'ordinateur ou produit logiciel pour l'étalonnage d'un capteur dans ou sur un appareil lequel présente de manière habituelle une tension de fonctionnement de 230 V, par exemple un robot de cuisine ou un appareil de nettoyage ou de traitement de sol, dans lequel l'appareil (1) comprend un capteur (10, 12) qui nécessite un étalonnage avant livraison ou première utilisation de l'appareil (1) et pour lequel l'appareil (1) peut être placé dans un mode d'étalonnage, **caractérisé en ce qu'**un microprocesseur ou un circuit électrique est prévu à l'aide duquel, par déroulement de programme, l'appareil (1) est susceptible d'être placé dans le mode d'étalonnage par application d'une tension d'entrée différente de la tension de fonctionnement de l'appareil (1) ou d'une séquence de tension prédéterminée de la tension d'entrée et est susceptible d'être placé à nouveau dans l'état prêt au fonctionnement habituel après la fin de l'étalonnage, lorsque la tension ou la séquence de tension est appliquée au raccordement prévu pour le fonctionnement habituel de l'appareil sous tension de fonctionnement, dans lequel l'appareil ne peut être placé qu'une seule fois dans le mode d'étalonnage.
